# EUROPÄISCHE PATENTSCHRIFT

(11) **EP 1 293 469 B1**
(45) Veröffentlichungstag und Bekanntmachung des Hinweises auf die Patenterteilung: **16.11.2005**
(21) Anmeldenummer: 02090322.5
(22) Anmeldetag: 09.09.2002
(51) Int. Cl.: B66C 19/00

(54) **Verladeeinrichtung für ISO-Container**
Loading device for ISO-containers
Dispositif de chargement pour conteneurs ISO

(30) Priorität: 14.09.2001 DE 10145513
(43) Veröffentlichungstag der Anmeldung: 19.03.2003
(73) Patentinhaber: Gottwald Port Technology GmbH, 40597 Düsseldorf (DE)
(72) Erfinder: Dobner, Mathias, 41569 Rommerskirchen (DE); Franzen, Hermann, 41238 Mönchengladbach (DE); Kröll, Joachim, 41363 Jüchen (DE)
(74) Vertreter: Moser & Götze

(56) Entgegenhaltungen:
- WO-A-96/09242
- DE-A- 3 339 092
- DE-C- 4 439 740
- DE-U- 29 719 466
- GB-A- 2 029 374
- US-A1- 2002 044 854

## Beschreibung

Die Erfindung betrifft eine Verladeeinrichtung für ISO-Container in einem Container-Terminal zum Be- und Endladen von Schiffen mit einer Containerbrücke, an deren Portalrahmen sich sowohl wasserseitig als auch landseitig über dessen Stützkonstruktion hinaus ein Ausleger erstreckt, an dem Laufschienen für eine Laufkatze mit einem Container-Lastaufnahmemittel zum Transport der Container vom Schiff auf den Kai und umgekehrt vorgesehen sind, wobei die Verladeeinrichtung unterhalb des landseitigen Auslegers im hinteren Bereich der Containerbrücke angeordnet ist und mit Container-Transportfahrzeugen zusammenwirkt.

Aus dem deutschen Gebrauchsmuster 297 19 466 ist ein Umschlagsystem für Container bekannt geworden, bei dem eine von einem Portalrahmen gebildete Containerbrücke eingesetzt wird. Der Portalrahmen ist auf einem Fahrwerk abgestützt, das entlang von Schienen parallel zum Kai, an dem das Schiff festgemacht ist, verfahrbar ist. Der Portalrahmen weist einen Ausleger auf, der sich sowohl wasserseitig als auch landseitig über die Stützkonstruktion hinaus erstreckt und an dem Laufschienen für eine Laufkatze angebracht sind, die mit Hilfe eines Spreaders Container vom Schiff auf den Kai und umgekehrt transportiert. Der Spreader ist so ausgelegt, dass er durch Manipulation vom Kranführer automatisch verriegelt mit dem Container in Eingriff bzw. außer Eingriff gebracht werden kann.

Der produktivitätsbestimmende Faktor eines solchen Umschlaggerätes ist die Zeitdauer für ein Lastspiel der Laufkatze, nämlich die Zeit, die erforderlich ist, für das Fördern der Container zwischen den Standflächen und das Lösen oder Ansetzen der Twistlocks. Diese dienen bekanntlich dazu, die auf den Standflächen übereinander gestapelten Container beim Transport, insbesondere beim Schiffstransport, gegen ein Verrutschen zu sichern. Die Container werden miteinander verriegelt, indem die Twistlocks in Öffnungen der Beschläge eingreifen und die innerhalb der Beschläge angeordneten Teile verdreht werden. Meistens werden halbautomatische Twistlocks verwendet, die beim Laden mit den unteren Beschlägen eines Containers in einer Vorposition verbunden werden. Beim Aufsetzen des Containers auf einen anderen Container findet automatisch eine Verrastung der Twistlocks mit dem Beschlag des unteren Containers statt, so dass diese beide nunmehr fest miteinander verbunden sind.

Beim Entladen der Container vom Standort werden zunächst vom Personal die Verriegelungen mit dem jeweils unteren Container oder dem Containerfahrzeug gelöst und der jeweils obere Container wird mit den noch daran befindlichen Twistlocks vom Schiff auf den Kai gefördert. Die Twistlocks müssen aber vor dem Absetzen des Containers auf die Kaifläche entfernt werden, was ebenfalls manuell geschieht, indem das dafür eingesetzte Personal unter den hängenden Container greift und die Twistlocks manuell löst und entfernt. Umgekehrt wird beim Laden der Container zunächst soweit angehoben, dass die Twistlocks von Hand zunächst in die unteren Beschläge eingesetzt werden können, bevor der Container zu seinem Standort transportiert wird.

Eine aus dem deutschen Gebrauchsmuster 297 19 466 bekannte Lösung beschreibt das Löschen und Laden der Container in zwei sich überlappenden Phasen, wobei zwei Laufkatzen eingesetzt werden, von denen die erste Laufkatze den Transport des Containers vom Schiff zu einer Manipulationsplattform und die zweite Laufkatze den Transport des Containers von der Plattform zur gewünschten Spur auf der Kaifläche übernimmt. Dort steht ein Fahrzeug zur Übernahme des Containers bereit. Die beiden die Container zeitlich überlappend transportierenden Laufkatzen reduzieren die produktive Arbeitsspielzeit, weil festgestellt wurde, dass für den Transport eines Containers zwischen Schiff und Plattform eine geringere Zeit benötigt wird, als für den Transport des Containers zur Absetzspur auf der Kaifläche einschließlich der Entnahme bzw. dem Ansetzen von Twistlocks.

Die bekannte Lösung ist aber nachteilig, weil die Verwendung der zweiten Laufkatze in der Containerbrücke zwar die Umschlagleistung erhöht, doch zusätzliche verhältnismäßig hohe Investitions-, Wartungs- und Instandhaltungskosten zur Folge hat. Darüber hinaus ist die bei der bekannten Lösung verwendete Plattform zur Montage und Demontage der Twistlocks für die Behandlung von Tank-Containern oder sonstigen Spezialcontainern (z.B. Kühlcontainer oder Container für die PKW-Verladung) nicht geeignet. Zwar erlauben die in der Entgegenhaltung ausgeführten Auflageflächen für den Container den freien Zugang zu den Eckbeschlägen, doch ist bei dieser Technik ein geschlossener Containerboden zwingend erforderlich. Dies ist aber bei Spezialcontainern nicht immer gewährleistet. Das hat zur Folge, dass diese Container aussortiert und auf dem Kai separat von zusätzlichem Personal behandelt werden müssen.

Ausgehend von dem Stand der Technik besteht die Aufgabe der vorliegenden Erfindung darin, durch kostengünstige Maßnahmen die Umschlagleistung der Containerbrücke insgesamt zu erhöhen und dabei auch eine sichere Montage und Demontage der Twistlocks an den Eckbeschlägen zu gewährleisten.

Zur Lösung der Aufgabe wird erfindungsgemäß vorgeschlagen, dass die Verladeeinrichtung aus mindestens zwei unabhängig voneinander quer zur Längsachse der Containerbrücke am Boden verfahrbaren, parallel zueinander und zum Ausleger ausgerichteten Brückenträgern besteht, die je eine Ladestationen für einen Container bilden und jeweils im Bereich ihrer Längsmitte eine um eine vertikale Achse drehbare Aufnahmeplattform für einen vom Lastaufnahmemittel absetzbaren und aufnehmbaren ISO-Container tragen.

Die vorgeschlagene Verladeeinrichtung steigert die Umschlagleistung der Containerbrücke deutlich. Sie ersetzt das zweite Katzfahrwerk in der Containerbrücke und ermöglicht ein Drehen der Container um mindestens 90°, um von der Transportstellung im Schiff in die Abtransportstellung des Transportfahrzeuges zu kommen. Die mindestens zwei vorgesehenen Ladestationen stellen einen Zwischenspeicher für den Container dar, einen Zwischenspeicher der auf Fahrwerken aus dem Ladebereich in den Übergabe- bzw. Übernahmebereich des Transportfahrzeuges verfahrbar ist.

Die Ladestation ist mit mindestens einem Fahrwerk auf einer quer zu seinem Brückenträger am Boden verlegten Fahrbahn oder Schiene verfahrbar. Die vorzugsweise für beide Ladestationen gemeinsame Schiene lässt eine exakte Positionierung der Ladestation zum Lastaufnahmemittel der Containerbrücke einerseits und zur Fahrspur des Transportfahrzeuges andererseits zu. Dabei kann es sich bei dem Transportfahrzeug um automatisierte fahrerlose Transportfahrzeuge (FTF) bzw. Automated Guided Vehicles (AGV) handeln; alternativ kann der Zu- und Abtransport der Container auch manuell mittels Straddle Carriers erfolgen.

Nach einem besonderen Merkmal der Erfindung ist vorgesehen, dass jeder Brückenträger jeder Ladestation L-förmig nach oben gekröpft ist und mit einem an seinem oberen gekröpften Ende angeordneten Schienenfahrwerk auf einer horizontalen Laufschiene verfahrbar ist, die an einem Längsträger angeordnet ist, der an der Stützkonstruktion der Containerbrücke quer zum Auslager befestigt ist. Bei dieser Konstruktion sind die Ladestationen formschlüssig mit der Containerbrücke verbunden, wobei die Konstruktion sowohl ein Verfahren der Containerbrücke gegenüber den Ladestationen wie auch ein Verfahren der Ladestationen gegenüber der Containerbrücke zulässt. Nach einem weiteren Merkmal der Erfindung ist vorgesehen, dass an der Unterseite des Längsträgers eine zur horizontalen Laufschiene parallel verlaufende weitere Laufschiene angeordnet ist, auf der ein an einer Momentenstütze der Ladestation befestigtes weiteres Schienenfahrwerk abrollt. Diese Momentenstütze an dem seeseitig angeordneten Schienenfahrwerk sichert die Ladestation gegen Kippmomente, die beispielsweise bei einer möglichen asymmetrischen Beladung der Aufnahmeplattform entstehen können.

Da die relativen Horizontalbewegungen zwischen der Containerbrücke und den Ladestationen stets den unterschiedlichen Prozessabläufen in den Geräten und den jeweiligen Be- und Entladesituationen angepasst werden müssen, ist nach einem weiteren Merkmal der Erfindung vorgesehen, dass im Bereich des Übergangs des gekröpften Brückenträgerteils zum horizontalen Brückenträgerteil eine vertikal wirkende ein- und ausfahrbare Bodenstütze angeordnet ist. Diese wird vorzugsweise hydraulisch betätigt und übernimmt im abgestützten Zustand die horizontalen Kräfte, die sich aus der Addition der Rollreibungen des seeseitigen antriebsfrei geschalteten Schienenfahrwerks und des anderen Schienenfahrwerks ergeben. Auf diese Weise kann die Ladestation relativ zum Boden fixiert werden, um die Übernahme oder Übergabe eines Containers vom Transportfahrzeug oder zum Transportfahrzeug vornehmen zu können; gleichzeitig kann die Containerbrücke, z.B. zum Ausgleich von Schiffskrängungen horizontal verfahren werden.

Erfindungsgemäß ist jede drehbare Aufnahmeplattform für den Container zur Lagerung unterschiedlicher ISO-Containergrößen ausgebildet und über eine Drehverbindung mit dem Brückenträger drehantreibbar verbunden. Die Aufnahmeplattform ist dadurch in der Lage, jegliche Größe der ISO-genormten Container aufzunehmen. Über die Drehverbindung und den Drehantrieb kann der abgesetzte Container in eine um 90° verdrehte Stellung geschwenkt werden, in der ein Transportfahrzeug den Container übernehmen bzw. übergeben kann.

Besonders günstig ist es, wenn die Aufnahmeplattform jeder Ladestation in den Bereichen, in denen die Ecken der lagerbaren ISO-Container zur Auflage kommen, mit Ausnehmungen zum Greifen und Manipulieren der Twistlock-Verbindunge versehen sind. Befindet sich die Aufnahmeplattform in der Übernahme bzw. Übergabeposition in Richtung der Längsachsen des L-förmigen Brückenträgers, so ist die Montage bzw. Demonatage der Twistlocks an den Container-Eckbeschlägen durch das dafür zuständige Personal durch die Ausnehmungen hindurch problemlos möglich.

Wenn vorzugsweise mit Aufnahmevorrichtungen versehene Transportfahrzeuge verwendet werden, so ist nach einem weiteren Merkmal der Erfindung vorgesehen, dass jede Laststation bei in ihrer Längsrichtung ausgerichteten Aufnahmeplattformen von Transportfahrzeugen zur Aufnahme oder zum Absetzen des ISO-Containers überfahrbar ist. Dazu wurde die Ladestation durch Querverfahren auf ihren Schienenfahrwerken in eine ihrer Endpositionen verbracht, die den Fahrspuren der Transportfahrzeuge entsprechen.

In einer Ausgestaltung der Erfindung ist auch denkbar, dass jede am Boden verfahrbare Ladestation an ihren beiden Enden mit Schienenfahrwerken auf am Boden verlegten Fahrbahnen oder Schienen verfahrbar ist und ihre Bewegungsabläufe hinsichtlich der jeweils anderen Ladestation wie auch hinsichtlich der Horizontalbewegung der Containerbrücke koordinierbar sind. Bei dieser Ausführungsform sind die Ladestationen nicht formschlüssig mit der Containerbrücke verbunden, jedoch hinsichtlich ihrer Bewegungsabläufe mit denen der Containerbrücke koordieniert. Statt an dem Träger der Containerbrücke laufen beide Schienenfahrwerke auf voneinander beabstandeten Schienen, ohne den sonstigen Bewegungsablauf zu verändern. Auch bei dieser Lösung ist ein unabhängiges Querverfahren sowohl der Ladestationen wie auch der Containerbrücke möglich, indem eine entsprechende Fahrsteuerung für die angetriebenen Fahrwerke vorgesehen ist.

Ein Arbeitsverfahren zum Betrieb einer Verladeeinrichtung für ISO-Container wie vorstehend beschrieben, ist durch folgende aufeinanderfolgende Arbeitsschritte beim Entladen eines Containerschiffs gekennzeichnet:
Ausgehend von einer Schiffsentladung wird der am Lastaufnahmemittel hängende Container abgesenkt und auf der Aufnahmeplattform einer Ladestation abgesetzt.
Der Container wird durch Drehen der Aufnahmeplattform um 90° in eine Position gebracht, in der die Containerlängsachse in Längsrichtung der Ladestation verläuft,
die Ladestation wird in eine Übergabeposition querverfahren, in der das Transportfahrzeug den Container übernimmt.
Während der Übergabe des Containers wird die andere Ladestation unter das Lastaufnahmemittel querverfahren und - nachdem die Aufnahmeplattform um 90° zur Längsrichtung der Ladestation gedreht wurde - mit einem weiteren Container beladen.
Die Vorgänge wiederholen sich im Wechselspiel, so dass stets mindestens ein Belade- und Übergabevorgang zeitgleich abläuft.

Ein Arbeitsverfahren zum Betrieb einer Verladeeinrichtung beim Beladen eines Containerschiffs weist folgende Arbeitsschritte auf:
Die Ladestation wird in eine Übergabestation querverfahren, in der das Transportfahrzeug den Container übergibt.
Der Container wird durch Drehen der Aufnahmeplattform um 90° in eine Position gebracht, in der die Containerlängsachse quer zur Längsrichtung der Ladestation verläuft,
der Container wird mit dem Lastaufnahmemittel von der Aufnahmeplattform der Ladestation abgehoben und hängend zum Schiff transportiert.
Während der Übernahme des Containers wird die andere querverfahrbare Ladestation - nachdem die Aufnahmeplattform um 90° zur Längsrichtung in der Ladestation gedreht wurde - von einem anderen Transportfahrzeug mit einem weiteren Container beladen.
Die Vorgänge wiederholen sich im Wechselspiel, so dass stets mindestens ein Belade- und Übergabevorgang zeitgleich abläuft.

Eine teilweise Überlagerung von Drehbewegung und Querverfahren zur Reduzierung der Taktzeit wäre möglich (z.B. nach 1/3 der Drehbewegung setzt die Querfahrt ein).

Die neuartige Vorrichtung ist als kostengünstige Ergänzung bekannter Umschlaggeräte vorteilhaft, weil die Verladeeinrichtung eine zweite Katze in der Containerbrücke ersetzt. Deshalb sind die Kosten für die Anschaffung und Instandhaltung im Vergleich zu konventionellen Lösungen, wie sie der gattungsbildende Stand der Technik vorschlägt, deutlich niedriger. Die Verladeeinrichtung eignet sich zur Vollautomatisierung und ist auch nachträglich in bestehende Systeme einsetzbar. Die Leistung des Containerterminals lässt sich mit der Erfindung spürbar erhöhen; denn mit der Verladeeinrichtung lassen sich mit dem einen Katzfahrwerk zwei bis drei Ladespuren bedienen. Zeitkritische Abläufe in der übergeordneten Terminallogistic werden durch die gezielte Ansteuerung der Containerbrücke in back reach durch AGVs oder Straddle Carriers verhindern. Die Anzahl der erforderlichen Container-Transportfahrzeuge kann dadurch reduziert werden.

Ein Ausführungsbeispiel der Erfindung ist in der Zeichnung dargestellt und wird nachfolgend beschrieben. Es zeigen
- Fig. 1: die Gesamtansicht einer Containerbrücke mit der erfindungsgemäßen Veladeeinheit,
- Fig. 2: eine Detailansicht der Verladeeinrichtung aus Fig. 1,
- Fig. 3: die Draufsicht auf die Verladeeinrichtung nach Fig. 2,
- Fig. 4: eine Ansicht der Ladestation mit um 90° gedrehter Aufnahmeplattform,
- Fig. 5: eine Draufsicht auf die Verladeeinrichtung,
- Fig.6 u.7: die Lastaufnahme durch ein Transportfahrzeug in zwei Schritten,
- Fig. 8: eine Draufsicht auf die Verladeeinrichtung in einer anderen Übernahmeposition,
- Fig. 9: eine Vorderansicht auf die Verladeeinrichtung nach Fig. 8 und
- Fig.10: eine alternative Verladeeinrichtung mit zwei Schienenfahrwerken.

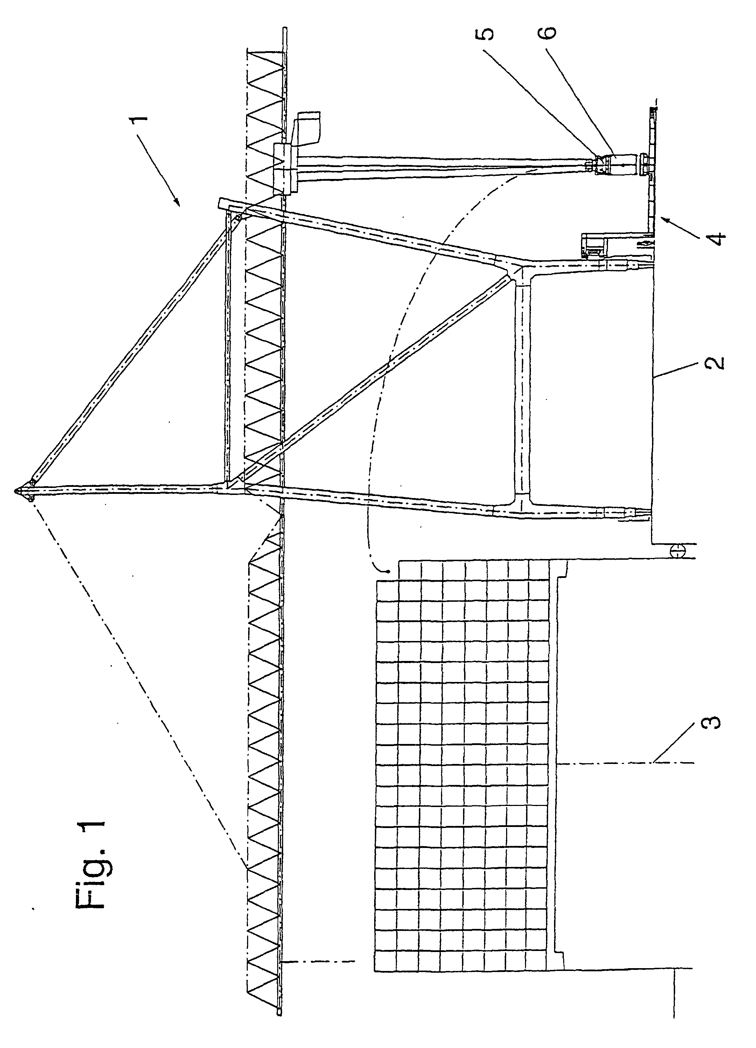

In Fig. 1 ist in einer Gesamtansicht der Kaianlage eines Containerterminals eine Containerbrücke 1 erkennbar, mit der an einem Kai 2 liegendes Containerschiff 3 beladen wird. Dazu ist eine zusätzliche erfindungsgemäße Verladeeinrichtung 4 an der rückwärtigen, dem Schiff abgewandten Seite der Containerbrücke vorgesehen. Der Container 6 hängt an einem Spreader, der seinerseits mit einem Katzfahrwerk an einem Ausleger verfahrbar ist, der sich seeseitig über das Schiff erstreckt und an seiner entgegengesetzten Seite die Stützkonstruktion der Containerbrücke überragt.

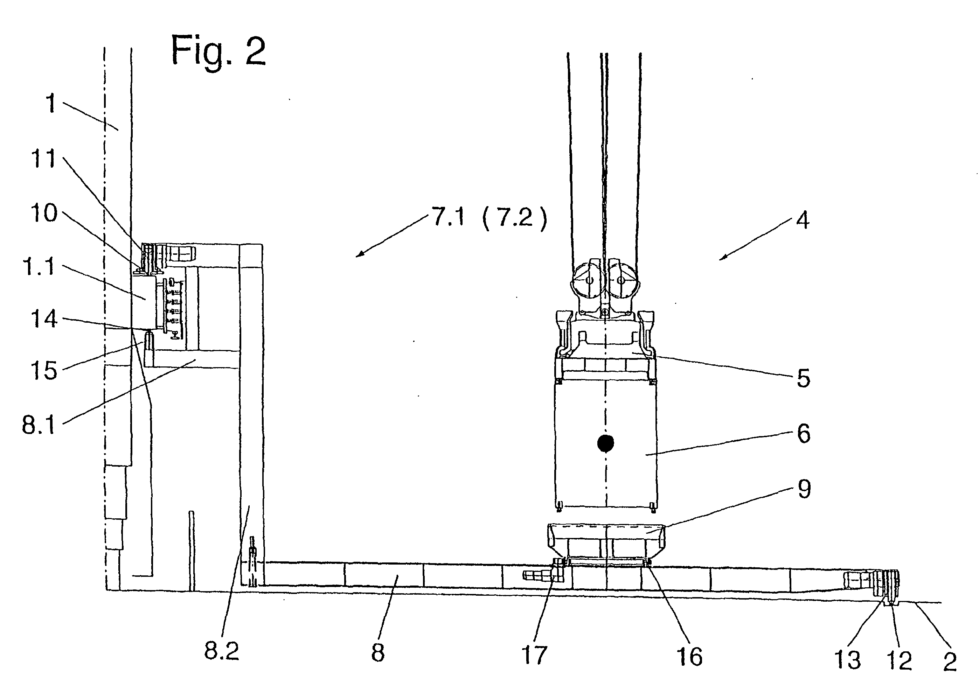

In Fig. 2 ist in einer Detailansicht der Verladeeinrichtung 4 eine von zwei Ladestationen 7.1 und 7.2 dargestellt. Jede Ladestation besteht aus einem L-förmigen Brückenträger 8 und der Drehaufnahmeplattform 9. Der an der Containerbrücke 1 gelagerte Längsträger 1.1 einer Kranbahn bildet auf seiner Oberseite die Basis für die Kranschiene 10, auf der sich der L-förmige Brückenträger 8 mit seinem seeseitigen Schienenfahrwerk 11 abstützt. Die zweite Kranschiene 12 auf dem Kai 2 dient dem landseitigen Schienenfahrwerk 13 als Fahrbahn.

Der an der Containerbrücke 1 gelagerte Träger 1.1 der Kranbahn bildet auf seiner Unterseite die Basis für eine weitere Kranschiene 14, auf der das Schienenfahrwerk 15 einer Momentenstütze 8.1 abrollt. Der relativ kleine Achsabstand der Räder im seeseitigen Schienenfahrwerk 11 und eine mögliche asymmetrische Beladung der Drehplattform 9 machen diese zusätzliche Kipplastsicherung unabdingbar.

Der L-förmige Brückenträger 8 und die Aufnahmeplattform 9 sind über eine Drehverbindung 16 miteinander verbunden. Angetrieben durch ein Drehwerk 17 ist die Plattform um 360° stufenlos schwenkbar.

Die relativen Horizontalbewegungen zwischen der Containerbrücke 1 und den Ladestationen 7.1 und 7.2 werden den unterschiedlichen Prozeßabläufen in den Geräten und den jeweiligen Be- und Entladesituationen angepasst. Dabei ist es im Falle der Be- und Entladung der Drehplattform 9 durch die Containerbrücke 1 notwendig, die Horizontalbewegungen der Containerbrücke 1 und der Ladestationen 7.1 und 7.2 zu synchronisieren.

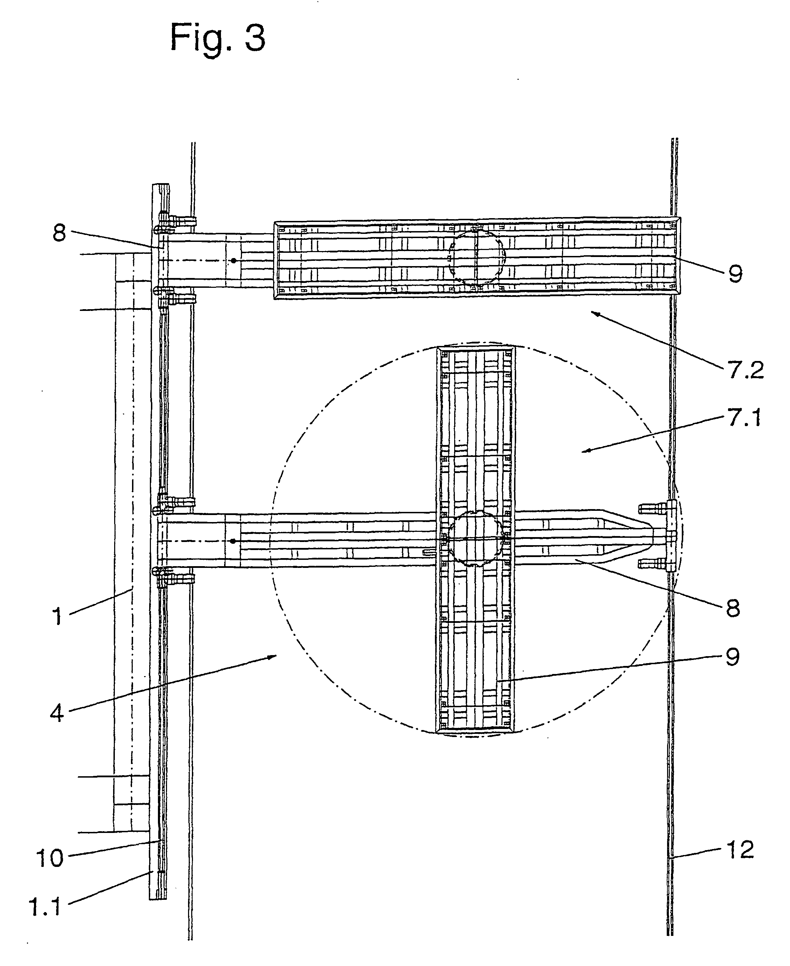

In Fig. 3 ist die zuvor beschriebene Verladeeinrichtung 4 in der Draufsicht dargestellt. Es wird ersichtlich, dass zu einer Verladeeinrichtung zwei Ladestationen 7.1 und 7.2 gehören, die auf den beiden Kranschienen 10 und 12 separat verfahren. Die Länge des Kranbahnträgers 1.1 und damit auch die mögliche Schienenlänge ist abhängig von der Messgröße "Länge über Puffer" der Containerbrücken. Die Fahr- und Drehbewegungen der Ladestationen werden durch eine übergeordnete Terminal-Logik koordiniert, gesteuert und überwacht.

Die mit Hilfe des Drehwerks 17 der Drehverbindung 16 um 90° zum L-förmigen Brückenträger 8 geschwenkte Aufnahmeplattform 9 der Ladestation 7.1 steht in der Be- bzw. Entladeposition der Containerbrücke. Die Ladestation 7.2 steht auf einer äußeren Maximalposition. Die Längsachsen des L-förmigen Brückenträgers 8 und der Drehplattform 9 verlaufen parallel.

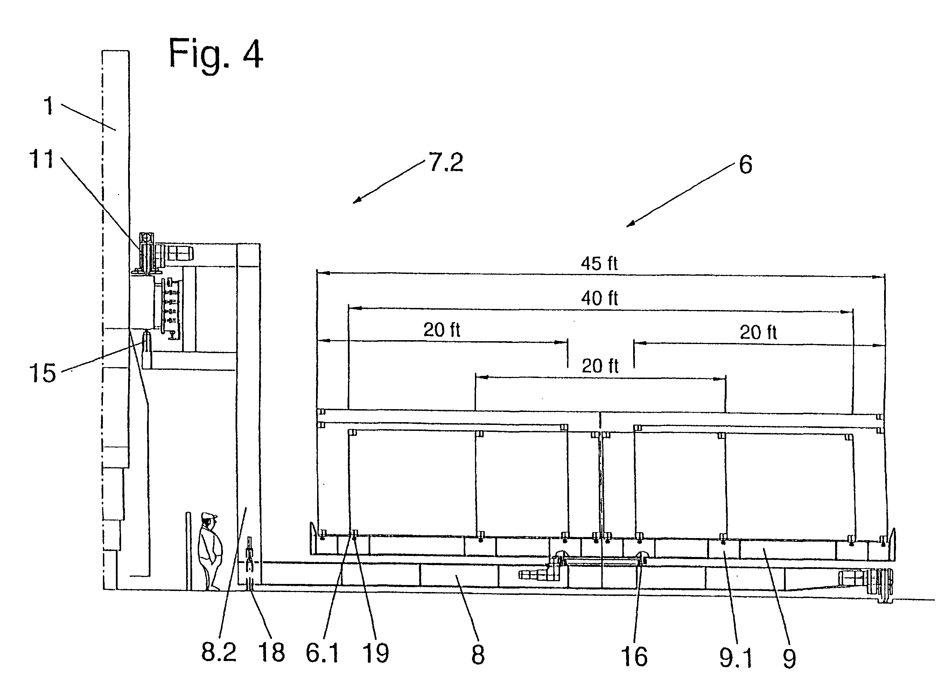

In Fig. 4 kann man erkennen, dass die Ladestation 7.2 (wie auch die nicht erkennbare Ladestation 7.1) eine Drehverbindung 16 trägt, die mit dem L-förmigen Brückenträger 8 und der Aufnahmeplattform 9 verbunden ist. Auf der Aufnahmeplattform 9 sind Container 6 in verschiedenen Größen (20 Fuß, 2 x 20 Fuß, 40 Fuß und 45 Fuß) an möglichen Positionen gelagert dargestellt. Die relativen Horizontalbewegungen zwischen Containerbrücke 1 und Ladestation 7.2 werden in unterschiedlichen Prozeßabläufen in den Geräten angepasst. Dabei ist es zum Beispiel in dieser Darstellung im Falle der Be- und Entladung der Aufnahmeplattform 9 durch einen Containertransporter (AGV oder Straddel Carrier) notwendig, den L-förmigen Brückenträger 8 in seiner momentanen Position festzusetzen. Die Containerbrücke 1 soll jedoch weiterhin frei operieren. Die dabei auftretenden Horizontalbewegungen der Containerbrücke 1, z.B. hervorgerufen durch Fahrbahnbewegungen zur Korrektur der Krängung des Schiffes, dürfen sich jedoch nicht auf die Ladestation 7.2 übertragen.

Um dies zu verhindern, ist am unteren Ende des Brückenträgers 8 im Bereich ihres nach oben gekröpften Teils 8.2 eine Abstützung 18 vorgesehen, die hydraulisch betätigt werden kann und die Horizontalkräfte, die sich aus der Addition der Rollreibungen des seeseitigen antriebsfreigeschalteten Schienenfahrwerks 11 und des Schienenfahrwerks 15 ergeben, aufnimmt. Die Abstützung 18 kann entsprechend klein dimensioniert werden.

In der in Fig. 4 dargestellten Position, in der sich die Längsachsen des L-förmigen Brückenträgers 8 und der Aufnahmeplattform 9 in zueinander paralleler Lage befinden, sind auch die Montage- bzw. Demonatage der Twistlocks 19 an den Container-Eckbeschlägen 6.1 durch das dafür zuständige Personal möglich. Große Öffnungen 9.1 an den Längsseiten der Aufnahmeplattform 9 machen dies problemlos möglich.

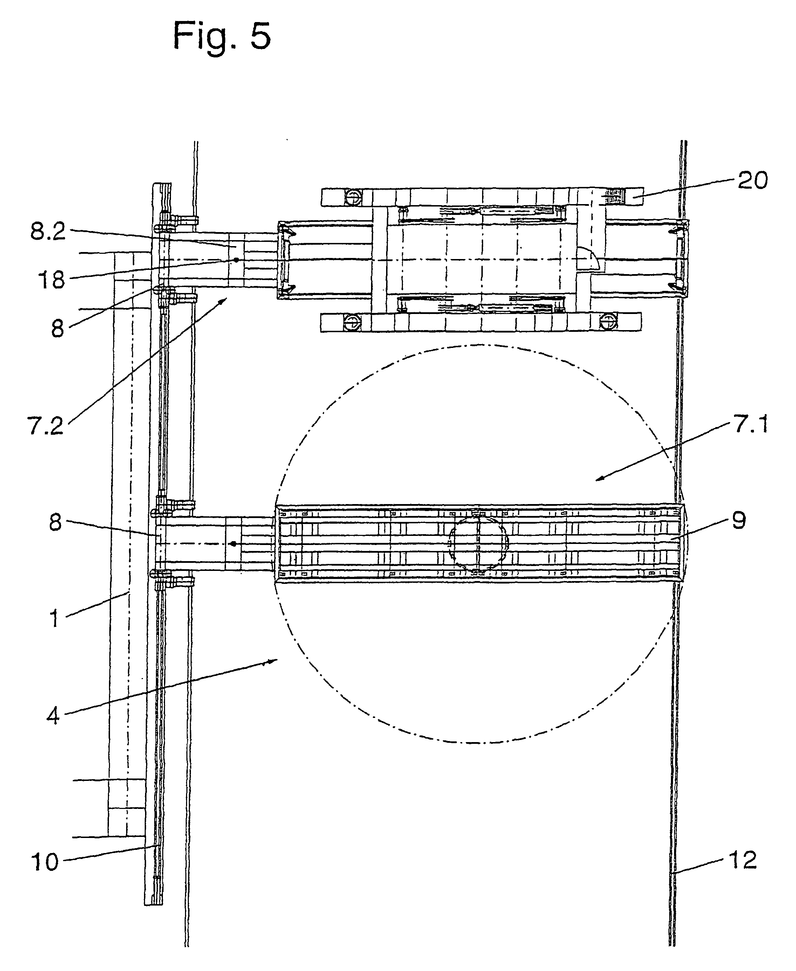

In Fig. 5 ist wieder eine Draufsicht auf eine Verladeeinrichtung der Erfindung dargestellt. Die Skizze zeigt die Verladeeinrichtung 4 mit den beiden Ladestationen 7.1 und 7.2, die auf den Kranschienen 10 und 12 separat verfahren. Die Ladestation 7.1 steht in der Be- bzw. Entladeposition der Containerbrücke 1. Nachdem die Aufnahmeplattform 9 um 90° geschwenkt wurde, verlaufen nun die Längsachsen des L-förmigen Brückenträgers 8 und der Aufnahmeplattform 9 parallel.

Die Ladestation 7.1 steht auf der äußeren maximalen Position. Beide Ladestationen lassen in dieser Position und in diesem Modus eine Be- und Entladung durch einen Containertransporter 20 zu. Es ist allerdings notwendig, dass in dieser Situation der L-förmige Brückenträger 8 in seiner momentanen Position festgesetzt wird, d.h. die am unteren Ende des nach oben gekröpften 8.2 Brückenträgers angebrachte Abstützung 18 ist aktiviert.

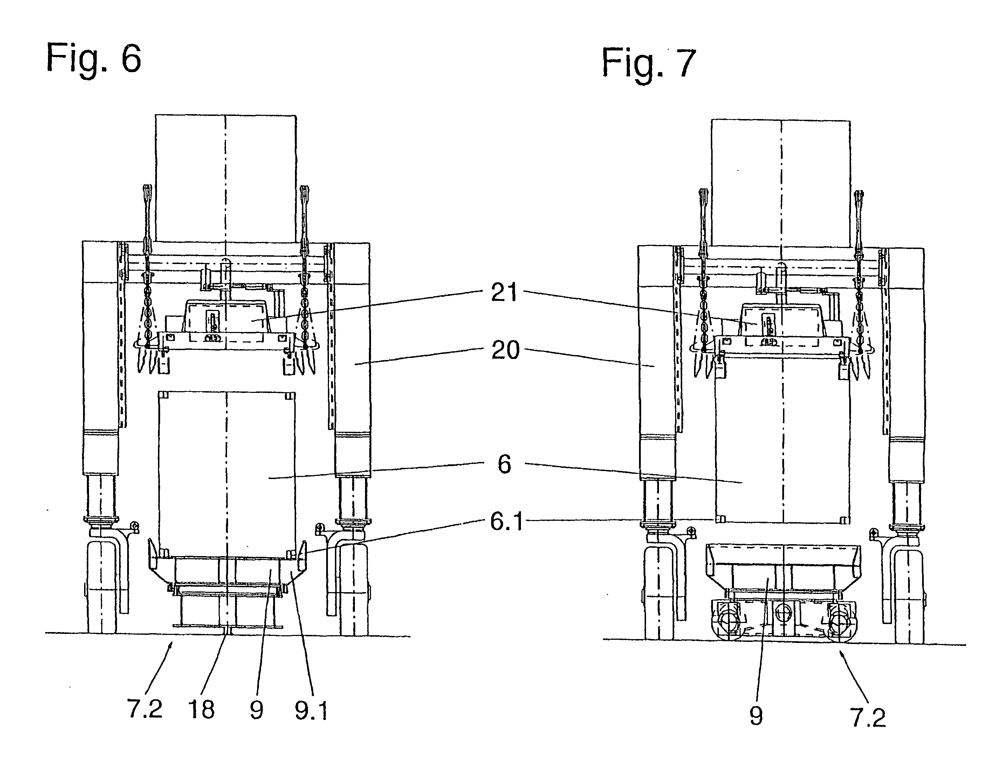

In den Figuren 6 und 7 ist der Lastaufnahmevorgang durch ein Container-Transportfahrzeug dargestellt. Bei betätigter Abstützung 18 erfolgt der Entladevorgang in der Ladestation 7.2. Nachdem durch die unterhalb der Container-Eckbeschläge 6.1 erkennbaren Montageöffnungen 9.1 an den Längsseiten der Aufnahmeplattform 9 die Twistlocks durch das dafür zuständige Personal demontiert sind, übernimmt ein Containertransporter 20 mittels Spreader 21 den Container 6 von der Aufnahmeplattform 9 und transportiert diesen in das Containerlager oder zu einem Abtransportmittel.

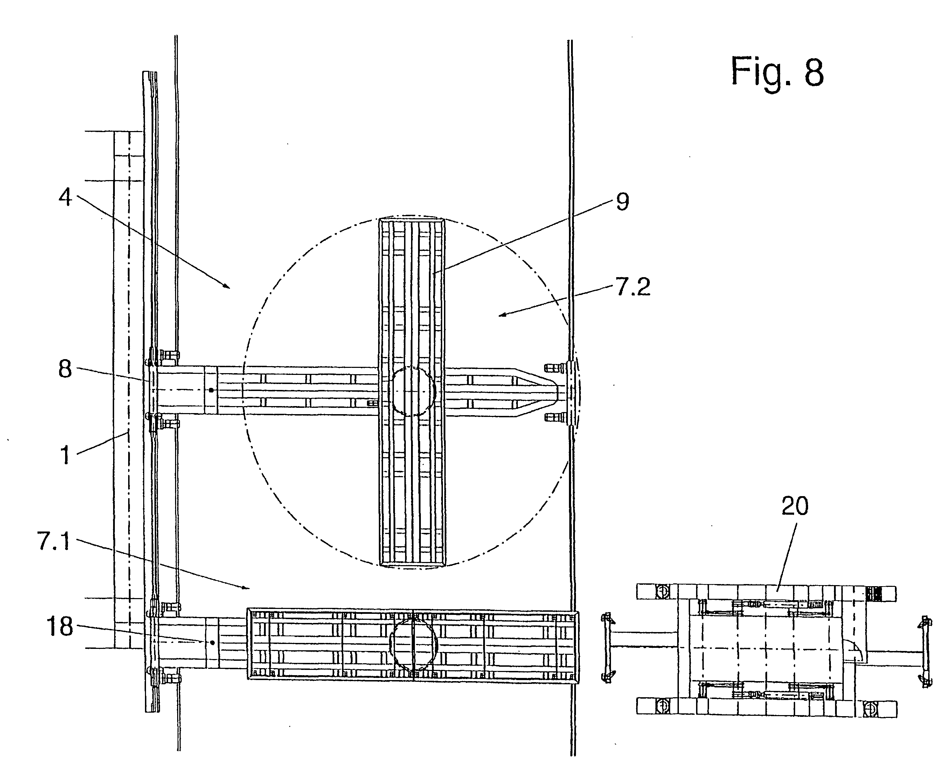

Fig. 8 zeigt die Verladeeinrichtung 4 in der Draufsicht mit ihren zwei Ladestationen 7.1 und 7.2. Die Ladestation 7.1 steht auf einer äußeren maximalen Position. Die Abstützung 18 ist aktiviert, die Ladestation 7.1 erwartet in dieser Position einen Entladevorgang durch einen Containertransporter 20. Die Ladestation 7.2 steht in der Be- bzw. Entladestation der Containerbrücke 1. In der Ladestation 7.2 wurde die auf L-förmigen Brückenträgern 8 gelagerte Drehaufnahmeplattform 9 um 90° zurückgeschwenkt. Sie ist damit wieder für einen Ladevorgang durch die Containerbrücken 1 bereit. Die Antriebe der Schienenfahrwerke der Containerbrücke 1 und der Ladestation 7.1 sind synchron geschaltet.

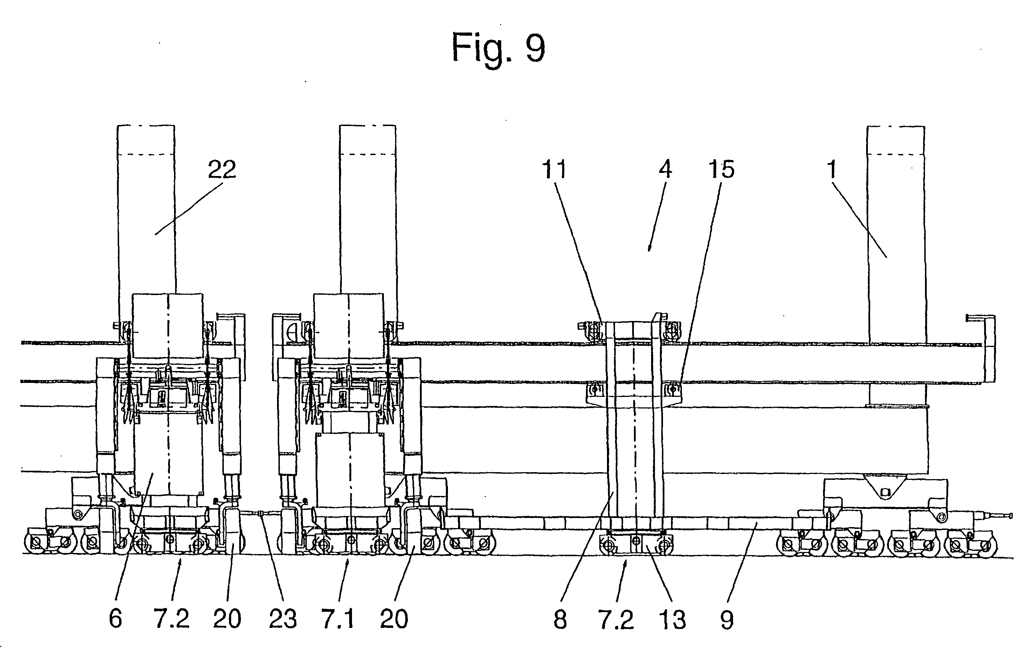

Fig. 9 zeigt die Vorderansicht der in Fig. 8 dargestellten und beschriebenen Situation. Zusätzlich erkannt man die Konstellation im Zusammenwirken mit einer zweiten Containerbrücke 22, die sich bis auf Pufferanschlag 23 zur ersten Containerbrücke 1 positioniert hat. Aus der an der zweiten Containerbrücke 22 operierenden Ladestation 7.2 kann unabhängig von der Verladeeinrichtung 4 der ersten Containerbrücke 1 ein Container 6 von einem Containertransporter 20 be- und entladen werden.

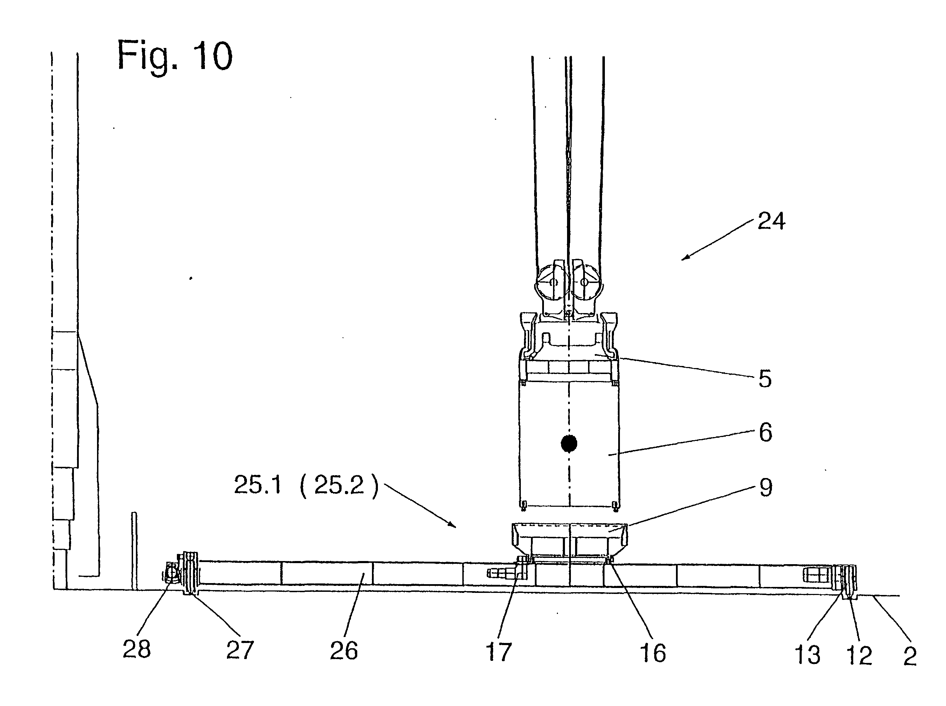

Fig. 10 schließlich zeigt in einer Detailansicht eine alternative Ausgestaltung der erfindungsgemäßen Verladeeinrichtung. Dabei befinden sich die Fahrbahnen von zwei an beiden Enden des Brückenträgers 26 angeordneten Schienenfahrwerken auf dem Kai. Eine direkte Verbindung mit der Containerbrücke ist nicht hergestellt, lediglich eine gesteuerte logistische Verbindung. Die Skizze zeigt zu der alternative Verladeeinrichtung 24 eine von zwei Ladestationen 25.1 und 25.2. Eine Ladestation besteht aus einem Brückenträger 26 und der Aufnahmeplattform 9. Eine erste Kranschiene 27 auf dem Kai 2 dient dem seeseitigen Schienenfahrwerk 28, die zweite Kranschiene 12 dem landseitigen Schienenfahrwerk 13 als Fahrbahn. Der Achsabstand der Räder im seeseitigen Schienenfahrwerk 27 ist ausreichend groß gewählt, so dass eine mögliche asymmetrische Beladung der Drehplattform 9 kein Kippen der Ladestationen 25.1 und 25.2 zur Folge hat. Der Brückenträger 26 und die Aufnahmeplattform 9 sind über eine Drehverbindung 16 miteinander verbunden, über diese ist die Aufnahmeplattform, von einem Drehwerk 17 angetrieben, um 360° stufenlos schwenkbar.

Die relativen Horizontalbewegungen zwischen Containerbrücke 1 und Ladestationen 25.1 und 25.2 werden den unterschiedlichen Prozessabläufen in den Geräten und den jeweiligen Be- und Entladesituationen angepasst. Dabei ist es z.B. im Fall der Be- und Entladung der Aufnahmeplattform 9 durch die Containerbrücke 1 notwendig, die Horizontalbewegungen der Containerbrücke 1 und der Ladestationen 25.1 und 25.2 zu synchronisieren. Die zu der anderen Lösung beschriebene hydraulische Abstützung 18 und deren Funktion ist bei der hier gezeigten alternativen Verladeeinrichtung nicht mehr erforderlich, weil Verladeeinrichtung und Containerbrücke voneinander entkoppelt sind.

## Patentansprüche

1. Verladeeinrichtung für ISO-Container in einem Container-Terminal zum Be- und Endladen von Schiffen mit einer Containerbrücke (1), an deren Portalrahmen sich sowohl wasserseitig als auch landseitig über dessen Stützkonstruktion hinaus ein Ausleger erstreckt, an dem Laufschienen für eine Laufkatze mit einem Container-Lastaufnahmemittel (5, 21) zum Transport der Container vom Schiff auf den Kai und umgekehrt vorgesehen sind, wobei die Verladeeinrichtung (4) unterhalb des landseitigen Auslegers im hinteren Bereich der Containerbrücke angeordnet ist und mit Container-Transportfahrzeugen zusammenwirkt,
**dadurch gekennzeichnet,**
**dass** die Verladeeinrichtung (4) aus mindestens zwei unabhängig voneinander quer zur Längsachse der Containerbrücke (1) am Boden verfahrbaren, parallel zueinander und zum Ausleger ausgerichteten Brückenträgern (8) besteht, die je eine Ladestationen (7.1;7.2) für einen ISO-Container (6) bilden und jeweils im Bereich ihrer Längsmitte eine um eine vertikale Achse drehbare Aufnahmeplattform(9)für einen vom Lastaufnahmemittel (5,21) absetzbaren und aufnehmbaren ISO-Container (6) tragen.

2. Verladeeinrichtung nach Anspruch 1,
**dadurch gekennzeichnet,**
**dass** jede Ladestation (4) mit mindestens einem Fahrwerk (13) auf einer quer zu seinem Brückenträger (8) am Boden verlegten Fahrbahn oder Schiene (12) verfahrbar ist.

3. Verladeeinrichtung nach Anspruch 1,
**dadurch gekennzeichnet,**
**dass** jeder Brückenträger (8) jeder Ladestation (7.1;7.2) L-förmig nach oben gekröpft ist und mit einem an seinem oberen gekröpften Ende (8.2) angeordnetem Schienenfahrwerk (11) auf einer horizontalen Laufschiene (10) verfahrbar ist, die an einem Längsträger angeordnet ist, der an der Stützkonstruktion der Containerbrücke (1) quer zum Ausleger befestigt ist.

4. Verladeeinrichtung nach Ansprüchen 1 bis 3,
**dadurch gekennzeichnet,**
**dass** an der Unterseite des Längsträgers eine zur horizontalen Laufschiene (10) parallel verlaufende weiter Laufschiene (14) angeordnet ist, auf der ein an einer Momentenstütze (8.1) der Ladestation (7.1;7.2) befestigtes weiteres Schienenfahrwerk(15)abrollt

5. Verladeeinrichtung nach Anspruch 4,
**dadurch gekennzeichnet,**
**dass** im Bereich des Übergangs des gekröpften Brückenträgerteils (8.2) zum horizontalen Brückenträgerteil (8) eine vertikal wirkende ein- und ausfahrbare Bodenstütze (18) angeordnet ist.

6. Verladeeinrichtung nach einem der Ansprüche 1 bis 5,
**dadurch gekennzeichnet,**
**dass** die drehbare Aufnahmeplattform (9) für den Container (6) zur Lagerung unterschiedlicher ISO-Containergrößen ( ) ausgebildet und über eine Drehverbindung mit dem Brückenträger(8)drehantreibbar verbunden ist.

7. Verladeeinrichtung nach einem der Ansprüche 1 bis 6,
**dadurch gekennzeichnet,**
**dass** die Aufnahmeplattform (9) jeder Ladestation (7.1;7.2) in den Bereichen, in denen die Ecken der lagerbaren ISO-Container (6) zur Auflage kommen, mit Ausnehmungen (9.1) zum Greifen und Manipulieren der Twistlock-Verbindungen versehenen sind

8. Verladeeinrichtung nach einem der Ansprüche 1 bis 7,
**dadurch gekennzeichnet,**
**dass** jede Ladestation (7.1;7.2) bei in ihrer Längsrichtung ausgerichteten Aufnahmeplattform (9) von Transportfahrzeugen (20) zur Aufnahme oder zum Absetzen des ISO-Containers (6) überfahrbar ist

9. Verladeeinrichtung nach Anspruch 1 und 2,
**dadurch gekennzeichnet,**
**dass** jede am Boden verfahrbare Ladestation (25.1;25.2) an ihren beiden Enden mit Schienenfahrwerken (13;28) auf am Boden verlegten Fahrbahn oder Schiene (12;27) verfahrbar ist und ihre Bewegungsabläufe hinsichtlich der jeweils anderen Ladestation (25.1 oder 25.2) wie auch hinsichtlich der Horizontalbewegung der Containerbrücke (1) koordinierbar sind.

10. Arbeitsverfahren zum Betrieb einer Verladeeinrichtung für ISO-Container wie in den vorhergehenden Ansprüchen beschrieben,
**gekennzeichnet durch** die folgenden aufeinanderfolgenden Arbeitsschritte beim Entladen eines Containerschiffes:
• Ausgehend von einer Schiffsentladung wird der am Lastaufnahmemittel hängende Container abgesenkt und auf der Aufnahmeplattform einer Ladestation abgesetzt,
• der Container wird **durch** Drehen der Aufnahmeplattform um 90° in eine Position gebracht, in der die Containerlängsachse in Längsrichtung der Ladestation verläuft,
• die Ladestation wird in eine Übergabeposition querverfahren, in der das Transportfahrzeug den Container übernimmt.
• während der Übergabe des Containers wird die andere Ladestation unter das Lastaufnahmemittel querverfahren und - nachdem die Aufnahmeplattform um 90° zur Längsrichtung der Ladestation gedreht wurde - mit einem weiteren Container beladen.
• die Vorgänge wiederholen sich im Wechselspiel, so dass stets mindestens ein Belade und Übergabevorgang zeitgleich ablaufen.

11. Arbeitsverfahren zum Betrieb einer Verladeeinrichtung für ISO-Container wie in den vorhergehenden Ansprüchen beschrieben,
**gekennzeichnet durch** die folgenden aufeinanderfolgenden Arbeitsschritte beim Beladen eines Containerschiffes:
• die Ladestation wird in eine Übergabeposition quer verfahren, in der das Transportfahrzeug den Container übergibt.
• der Container wird **durch** Drehen der Aufnahmeplattform um 90° in eine Position gebracht, in der die Containerlängsachse quer zur Längsrichtung der Ladestation verläuft,
• der Container wird mit dem Lastaufnahmemittel von der Aufnahmeplattform der Ladestation abgehoben und hängend zum Schiff transportiert
• während der Übernahme des Containers wird die andere quer verfahrene Ladestation - nachdem die Aufnahmeplattform um 90° zur Längsrichtung der Ladestation gedreht wurde - von einem anderen Transportfahrzeug mit einem weiteren Container beladen.
• die Vorgänge wiederholen sich im Wechselspiel, so dass stets mindestens ein Belade und Übergabevorgang zeitgleich ablaufen.

12. Arbeitsverfahren zum Betrieb einer Verladeeinrichtung nach den Ansprüchen 10 und 11,
**dadurch gekennzeichnet,**
**dass** das Querverfahren und Drehen der Ladestation bzw. der Aufnahmeplattform überlagert werden.

## Claims

1. Loading unit for ISO containers in a container terminal for loading and unloading ships with a container bridge (1) on the gantry frame of which both on the water side and also on the land side a jib extends beyond the support structure of said gantry frame, on which jib running rails for a trolley with a container load receiving means (5, 21) for transporting the containers from the ship onto the quay and vice versa are provided, wherein the loading device (4) is disposed below the land-side jib in the rear region of the container bridge and cooperates with container transport vehicles,
**characterised in that**
the loading device (4) consists of at least two bridge supports (8) which can move in a mutually independent manner transverse to the longitudinal axis of the container bridge (1) on the ground and are aligned in parallel with each other and with the jib, which bridge supports each form a loading stations (7.1; 7.2) for an ISO container (6) and in each case in the region of their longitudinal middle support a receiving platform (9), which can rotate about a vertical axis, for an ISO container (6) which can be set down and received by the load receiving means (5, 21).

2. Loading device as claimed in claim 1, **characterised in that** each loading station (4) can travel with at least one travelling mechanism (13) on a track or rail (12) laid transverse to its bridge support (8) on the ground.

3. Loading device as claimed in claim 1, **characterised in that** each bridge support (8) of each loading station (7.1; 7.2) is bent upwards in an L-shaped manner and, with a rail travelling mechanism (11) disposed on its bent upper end (8.2), can travel on a horizontal running rail (10) which is disposed on a longitudinal support which is attached to the support structure of the container bridge (1) transverse to the jib.

4. Loading device as claimed in claims 1 to 3, **characterised in that** on the lower side of the longitudinal support a further running rail (14) is disposed which extends in parallel with the horizontal running rail (10), on which further running rail a further rail travelling mechanism (15) attached to a moment support (8.1) of the loading station (7.1; 7.2) rolls.

5. Loading device as claimed in claim 4, **characterised in that** in the region of the transition of the bent bridge support part (8.2) to the horizontal bridge support part (8) a vertically acting floor support (18) which can travel in and out is disposed.

6. Loading device as claimed in any one of claims 1 to 5, **characterised in that** the rotatable receiving platform (9) for the container (6) is formed for storage of different ISO container sizes ( ) and is connected to the bridge support (8) in a rotationally driveable manner via a rotational connection.

7. Loading device as claimed in any one of claims 1 to 6, **characterised in that** the receiving platform (9) of each loading station (7.1; 7.2) in the regions in which the corners of the storable ISO containers (6) come into position are provided with recesses (9.1) for engaging and manipulating the twistlock connections.

8. Loading device as claimed in any one of claims 1 to 7, **characterised in that**, when the receiving platform (9) is aligned in its longitudinal direction, each loading station (7.1; 7.2) can be passed over by transport vehicles (20) to receive or set down the ISO container (6).

9. Loading device as claimed in claim 1 and 2, **characterised in that** each loading station (25.1; 25.2) which can travel on the ground can travel on its two ends by means of rail travelling mechanisms (13; 28) on a track or rail (12; 27) laid on the ground and its movement sequences can be coordinated with respect to the respective other loading station (25.1 or 25.2) and also with respect to the horizontal movement of the container bridge (1).

10. Operating process for operating a loading device for ISO containers as described in the preceding claims,
**characterised by** the following successive working steps when unloading a container ship:
• starting with unloading a ship the container suspended on the load receiving means is lowered and set down on the receiving platform of a loading station,
• by rotation of the receiving platform through 90° the container is brought into a position in which the container longitudinal axis extends in the longitudinal direction of the loading station,
• the loading station is moved transversely into a transfer position in which the transport vehicle takes over the container,
• during the transfer of the container the other loading station is moved transversely below the load receiving means and - after the receiving platform has been rotated though 90° with respect to the longitudinal direction of the loading station - is loaded with a further container,
• the processes are repeated in an alternating manner so that at least one loading and transfer process is always taking place at the same time.

11. Operating process for operating a loading device for ISO containers as described in the preceding claims,
**characterised by** the following successive working steps when loading a container ship:
• the loading station is transversely moved into a transfer position, wherein the transport vehicle passes the container over,
• the container is brought into a position by rotation of the receiving platform though 90°, in which position the container longitudinal axis extends transverse to the longitudinal direction of the loading station,
• the container is raised with the load receiving means from the receiving platform of the loading station and transported in a suspended manner to the ship,
• during the transfer of the container the other transversely moved loading station - after the receiving platform has been rotated through 90° with respect to the longitudinal direction of the loading station - is loaded with a further container by another transport vehicle,
• the processes are repeated in an alternating manner so that at least one loading and transfer process is always taking place at the same time.

12. Operating process for operating a loading device as claimed in claims 10 and 11, **characterised in that** the transverse movement and rotation of the loading station or of the receiving platform are superimposed.

## Revendications

1. Installation de transbordement pour conteneurs ISO dans un terminal à conteneurs pour le chargement et le déchargement de navires, avec un pont pour conteneurs (1) au cadre portique duquel est prévu un bras qui s'étend au-delà de la structure porteuse, aussi bien côté eau que côté terre ferme, laquelle installation est équipée de rails de roulement pour un chariot roulant avec un moyen de prise en charge de conteneurs (5, 21) pour le transport des conteneurs du navire au quai et inversement, l'installation de transbordement (4) étant disposée au-dessous du bras, côté terre ferme, dans la zone arrière du pont pour conteneurs et coopérant avec des véhicules de transports de conteneurs,
**caractérisée en ce que**
l'installation de transbordement (4) est composée d'au moins deux poutres de pont (8) mobiles sur le sol, indépendamment l'une de l'autre, perpendiculairement à l'axe longitudinal du pont déchargeur de conteneurs (1), orientées parallèlement l'une par rapport à l'autre et par rapport au bras, lesquelles forment chacune un poste de transbordement (7.1; 7.2) pour un conteneur ISO, et portent chacune, dans leur région centrale longitudinale une plate-forme de réception (9), tournant autour d'un axe vertical, pour la réception d'un conteneur ISO (6) pouvant être déchargé et pris en charge par des moyens de manutention de charge (5, 21).

2. Installation de transbordement selon la revendication 1,
**caractérisée en ce que**
chaque poste de transbordement (4) peut se déplacer, avec au moins un mécanisme de roulement (13), sur un chemin de roulement (12) installé sur le sol, perpendiculairement aux poutres de pont (8).

3. Installation de transbordement selon la revendication 1,
**caractérisée en ce que**
chaque poutre (8) de chaque poste de transbordement (7.1 ; 7.2) est coudée en forme de L vers le haut et peut se déplacer au moyen d'un mécanisme de roulement sur rail (11), agencé à son extrémité supérieure, coudée (8.2), sur un rail horizontal (10) qui est agencé sur un longeron, qui est fixé à la structure porteuse du pont pour conteneurs (1), perpendiculairement au bras.

4. Installation de transbordement selon les revendications 1 à 3,
**caractérisée en ce que**,
sur la face inférieure du longeron, est agencé un autre rail (14), qui s'étend parallèlement au rail horizontal (10), et sur lequel roule un autre mécanisme de roulement (15) fixé au support anti-basculement (8.1) du poste de transbordement (7.1 ; 7.2).

5. Installation de transbordement selon la revendication 4,
**caractérisée en ce que**,
dans la zone de passage de la partie coudée (8.2) à la partie horizontale (8) de la poutre de pont, est disposé un appui au sol (18) rétractile et extractible agissant verticalement.

6. Installation de transbordement selon l'une des revendications 1 à 5,
**caractérisée en ce que**
la plate-forme tournante (9) recevant les conteneurs (6) est configurée pour le stockage de conteneurs ISO de différentes grandeurs et est reliée, commandée en rotation, à la poutre de pont (8), par l'intermédiaire d'une liaison rotative.

7. Installation de transbordement selon l'une des revendications 1 à 6,
**caractérisée en ce que**
la plate-forme de réception (9) de chaque poste de transbordement (7.1 ; 7.2) est pourvue d'évidements (9.1) pour saisir et manipuler les verrous tournants, dans les sections dans lesquelles les coins des conteneurs ISO (6) à stocker viennent se loger.

8. Installation de transbordement selon l'une des revendications 1 à 7,
**caractérisée en ce que**
chaque poste de transbordement (7.1 ; 7.2), lorsque la plate-forme de réception (9) est orientée dans sa direction longitudinale, peut être traversé par des véhicules de transport (20) pour la prise en charge ou le déchargement du conteneur ISO (6).

9. Installation de transbordement selon les revendications 1 et 2,
**caractérisée en ce que**
chaque poste de transbordement, mobile au sol, peut, à ses deux extrémités, se déplacer avec des mécanismes de roulement sur rail (13; 28), sur un chemin de roulement ou un rail installé sur le sol, et **en ce que** son déplacement peut être coordonné par rapport à l'autre poste de travail (25.1 ou 25.2) aussi bien que par rapport au déplacement horizontal du pont pour conteneurs (1).

10. Mode opératoire pour la mise en service d'une installation de transbordement pour conteneurs ISO comme décrite dans les revendications précédentes,
**caractérisé par** les étapes de travail successives suivantes lors du déchargement d'un navire porte-conteneurs:
- Lors d'un déchargement de navire le conteneur, suspendu au moyen de manutention de charge, est descendu et déposé sur la plate-forme de réception d'un poste de transbordement,
- le conteneur est amené, par pivotement de la plate-forme de réception sur 90°, dans une position dans laquelle l'axe longitudinal du conteneur est orienté dans la direction longitudinale du poste de transbordement,
- le poste de transbordement est conduit transversalement dans une position de transfert dans laquelle le véhicule de transport prend le conteneur en charge,
- pendant le transfert du conteneur, l'autre poste de transbordement est conduit transversalement sous le moyen de manutention de la charge et - après que la plate-forme de réception ait été tournée de 90° par rapport à la direction longitudinale du poste de transbordement - est chargé avec un autre conteneur,
- les opérations sont répétées par cycles afin qu'au moins une opération de chargement et de transfert se déroulent toujours de manière isochronique.

11. Mode opératoire pour la mise en service d'une installation de transbordement pour conteneurs ISO comme décrite dans les revendications précédentes,
**caractérisé par** les étapes de travail successives suivantes lors du chargement d'un navire porte-conteneurs:
- le poste de transbordement est conduit transversalement dans une position dans laquelle le véhicule de transport transfert le conteneur,
- le conteneur est amené, par pivotement de la plate-forme de réception sur 90°, dans une position dans laquelle l'axe longitudinal du conteneur est orienté transversalement à la direction longitudinale du poste de transbordement,
- le conteneur est soulevé de la plate-forme de réception avec le moyen de manutention de charge et transporté, suspendu, jusqu'au navire,
- pendant la prise en charge du conteneur - après que la plate-forme de réception ait été tournée de 90° par rapport à la direction longitudinale du poste de transbordement - l'autre poste de transbordement, qui se déplace transversalement, est chargé avec un autre conteneur par un autre véhicule de transport,
- les opérations sont répétées par cycles afin qu'au moins une opération de chargement et de transfert se déroulent toujours de manière isochronique.

12. Mode opératoire pour la mise en service d'une installation conformément aux revendications 10 et 11,
**caractérisé en ce que**
le déplacement transversal et le pivotement du poste de transbordement resp. de la plate-forme de réception sont superposés.
